# EUROPEAN PATENT SPECIFICATION

(11) **EP 0 892 244 B1**
(45) Date of publication and mention of the grant of the patent: **09.04.2003**
(21) Application number: 98830430.9
(22) Date of filing: 15.07.1998
(51) Int. Cl.: G01B 11/16, G01D 5/353, G01M 11/08

(54) **Check system for monitoring the strain status of high pressure bottles particularly methane gas bottles for motor-vehiles**
System zur Überwachung des Spannungszustandes von Hochdruckflaschen, insbesondere Methangasflaschen für Kraftfahrzeugen
Système de contrôle de la tension de récepteurs de gaz à haute pression, en particulier de récepteurs pour méthane pour automobiles

(30) Priority: 18.07.1997 IT TO970654
(43) Date of publication of application: 20.01.1999
(73) Proprietor: C.R.F. Società Consortile per Azioni, 10043 Orbassano (TO) (IT)
(72) Inventor: Innocenti, Gianfranco, Strada Torino 50 10043 Orbassano, Torino (IT); Conti, Luigi, Strada Torino 50 10043 Orbassano, Torino (IT)
(74) Representative: Buzzi, Franco

(56) References cited:
- EP-A- 0 713 077
- GB-A- 1 570 511
- US-A- 6 004 639

## Description

The present invention is generally related to high pressure bottles, and more particularly to methane gas bottles for motor-vehicles.

These bottles, designed for maximum pressure of about 200 bar can be produced according to one of the following three manufacturing techniques:
1. Monolithic metallic bottles: made of steel or aluminium by extrusion/heat forming (welded bottles are not allowed).
2. Partially composite material bottles: these bottles are also made in one piece of steel or aluminium but the wall thickness thereof is not sufficient to bear the maximum load; a reinforcement is added which is constituted by a glass fibre winding which provides the required resistance performance.
3. Entirely composite material bottles: a thermoplastic material liner is wound along with carbon and glass fibres to which the function of bearing the whole load imposed by the pressure is committed; the liner accomplishes the tasks of both a support for the winding and an airtight member (the fibres are affected by porosity and, therefore, gas leakage therethrough might occur).

According to the rules presently in force on this subject, in some countries only bottles of the above first type are admitted, while in other countries the use of bottles of the second and third types is also allowed. The bar to employ partially or entirely composite material bottles is bound to the difficulty of carrying out structural calculation thereof, as required by the rules, in addition to tightness and burst tests. Actually, some recently occurred accidents seem to support the greater caution of some national laws.

The present invention is directed in particular to the bottles of the second and third type. i.e. whose body is at least partially made of composite material, and the object thereof is to overcome criticalness of these bottles due to the uncertainty of their structural calculation.

More particularly, an object of the present invention is to provide a check system capable to monitor the status of local strain of the bottle body over the entire surface thereof.

A further object of the invention is to provide a check system which is also adapted to perform other functions, such as for instance to indicate residual gas charge status (fuel reserve), further to continuous monitoring of the mechanical and thermal safety conditions of the bottle in use.

According to the invention, these objects are achieved by a check system for monitoring the strain status of high pressure bottles, particularly methane gas bottles for motor-vehicles, comprising a body at least partially made of a composite material, characterised in that it comprises:
- at least one continuous optical fibre sensor wound around the bottle and incorporated within said composite material, said optical fibre including Bragg grating reflective elements, mutually spaced apart and having given reflection wavelengths in an undeformed condition,
- an optical source transmitter to supply a light radiation to the optical fibre,
- an electro-optical detector of the light radiation back-reflected by said Bragg grating, and
- analyser means operatively connected to said electro-optical detector to compare the wavelengths of the light radiation reflected by said Bragg gratings with said given wavelengths and to point out any variations thereof.

The optical fibre is conveniently included within said composite material upon manufacturing of the bottle.

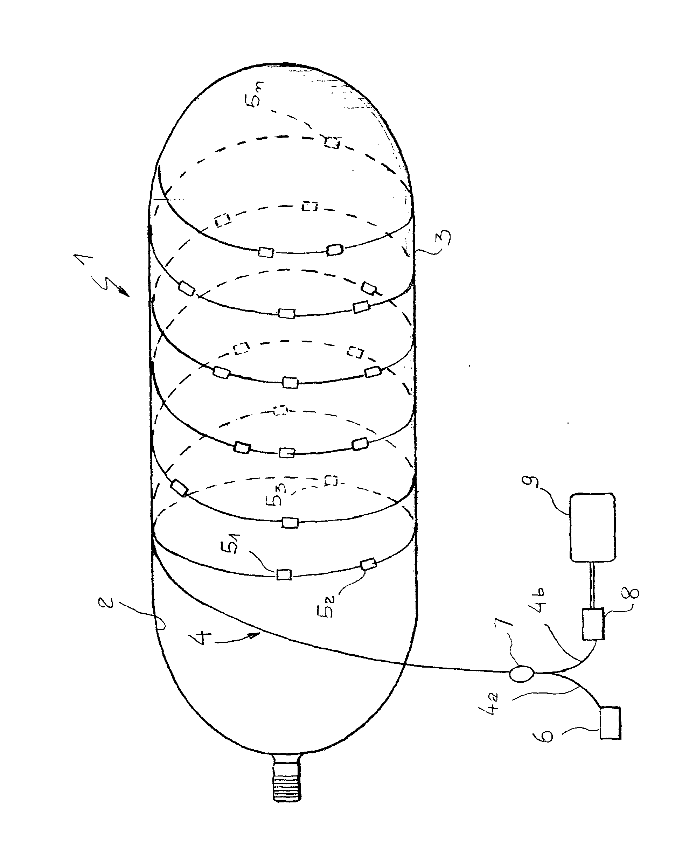

The invention will now be disclosed in detail with reference to the accompanying drawing, purely provided by way of non limiting example, which shows diagrammatically a check system according to the invention applied to a high pressure gas bottle.

Referring to the drawing, reference numeral 1 designates a high pressure gas bottle, for instance of methane gas for motor-vehicles, formed by an inner monolithic metal body 2, normally made of steel, and by an outer composite material reinforcement 3 including, in a conventional way, a glass fibre winding.

A thin optical fibre, having for instance a diameter of a few hundredths of millimetres and included with the fibres forming the winding, and thus incorporated within the composite material layer 3, is substantially helically wound over the bottle 1.

The optical fibre 4 defines an optical sensor of the quasi-distributed type, by virtue of including a plurality of Bragg grating reflective elements 5₁, 5₂, 5₃, ... 5ₙ, arranged at predetermined intervals and each having a given reflection wavelengths in an undeformed condition. This wavelengths in the undeformed condition can be same or different among the various Bragg gratings.

The arrangement of the Bragg gratings (Fibre Bragg Grating, FBG) and the related operation principles are well known in the art, for instance from US-5,048,913 and US-5,042,897, and also well known in the imprinting method of such Bragg gratings onto optical fibres, for instance from US-4,807,950 and US-5,367,588. Briefly, these Bragg gratings consist of reflective elements in which the wavelengths of the reflected light radiation changes when the section of the optical fibre containing these reflective elements is placed under mechanical strain, for instance subjected to traction, or is subjected to a change in temperature. As a consequence, analysing and comparing the wavelengths of the reflected light radiation with the wavelengths corresponding to the undeformed condition of the Bragg gratings, an indication is obtained about the fact that the corresponding areas of the optical fibre - and thus of the bottle 1 - are or are not subjected to a mechanical strain or to a temperature variation.

To carry out the above, the system according to the invention comprises an optical source transmitter 6 connected to a first branch 4a of the optical fibre 4 for emission, through an optical coupler 6, of a light radiation through the optical fibre 4 itself. The portion of the light radiation back-reflected by means of the Bragg gratings 5₁, 5₂, 5₃, ... 5ₙ is supplied, via the optical coupler 7 and a second branch 4b of the optical fibre 4, to an electro-optical detector 8 in turn connected to an electronic processing unit 9.

In practice the optical fibre 4 enables detecting and transforming the local mechanical and/or thermal strain conditions of the bottle 1 into electrical coded signals. The processing unit 9 is designed to de-code the signals based upon spectrum characteristics and to provide a signal in case the wavelengths of the radiation back-reflected by one or more of the Bragg gratings 5₁, 5₂, 5₃, ... 5ₙ does not correspond to the related reflected wavelengths in the undeformed condition, further allowing immediate location of the interested Bragg grating(s).

In case the reflection wavelengths in the undeformed condition of the Bragg gratings 5₁, 5₂, 5₃, ... 5ₙ is different from one another, the optical source transmitter 6 is designed to transmit the light radiation in a continuous fashion, and the signals of the electro-optical detector 8 shall be examined thoroughly by the electronic processing unit 9 within the domain of these wavelengths.

Also envisageable is an embodiment of the optical fibre 4 in which the reflection wavelengths in the undeformed condition of the Bragg gratings 5₁, 5₂, 5₃, ... 5ₙ are same. In this case the optical source transmitter 6 shall be designed to transmit the light radiation in a pulsed fashion, and the signal of the electro-optical detector 8 shall be considered by the electronic processing unit 9 within the domain of time.

The function and the advantages of the system according to the invention can be summarised as follows.

On the manufacturing point of view: once having produced the bottle 1 it is possible to detect during its individual testing (generally carried out by loading the bottle with oil under pressure) the relationship between the inner pressure and the strain status of the wound fibres, which would be otherwise unknown or calculated with a certain degree of uncertainty. Moreover, construction of the partially composite bottles (corresponding to those of the second type indicated in the above) contemplates a step, named ''autofrettage'', consisting of applying, following winding of the reinforcement fibre, a pressure within the bottle such as to bring the inner metal wall thereof into close contact with the winding itself. This step is necessary for the winding to correctly perform its task of structural reinforcement, but is affected by a certain degree of indetermination since the metal material of the bottle, in order to reach definitively the above contact, must be brought to its yeld point. According to current practice, however, it is not possible to know with a sufficient certainty whether or not this point has been actually reached and to what extent the contact with the winding determines a pre-loading condition of the latter. The system according to the invention enables to monitor the "autofrettage" operation and to verify correctness thereof.

On the point of view of safety diagnostics system: continuous monitoring allows to instantaneously detect potentially dangerous mechanical and/or thermal (namely a fire) condition and to automatically actuate the necessary intervention (opening a gas discharge solenoid valve).

On the point of view of useful indication: the inner pressure of the bottle constitutes a useful signal to indicate the status of residual charge of the bottle, i.e., in case of methane gas bottles for motor-vehicle, the available fuel reserve.

On the point of view of periodical checking required by the law: the rules presently in force in connection with methane gas bottles for motor-vehicle require that a check control of the bottle tightness is carried out periodically (for instance every five years), which require removal thereof from the vehicle in order to perform the necessary test. This practice constitutes a non negligible complication for the user, and anyway it does not provide any indication about the actual fatigue status of the bottle. By means of the system according to the invention this practice would be useless, since the signal provided by the optical fibre as a function of the pressure within the bottle is more than sufficient to indicate the fatigue condition thereof.

Naturally, the details of construction and the embodiments may be widely varied with respect to what has been disclosed and illustrated, without thereby departing from the appended claims.

## Claims

1. Check system for monitoring the strain status of high pressure bottles, particularly methane gas bottle for motor-vehicles, comprising a body (2) at least partially made of a composite material (3), comprising:
- at least one continuous optical fibre sensor (4) wound around the bottle (1) and incorporated within said composite material (3), said optical fibre including Bragg grating reflective elements (5₁, 5₂, 5₃, ... 5ₙ) mutually spaced apart and having given reflection wavelengths in an undeformed condition,
- an optical source transmitter (6) to supply a light radiation to the optical fibre (4),
- an electro-optical detector (8) of the light radiation back-reflected by said Bragg gratings (5₁, 5₂, 5₃, ... 5ₙ), and
- analyser means (9) operatively connected to said electro-optical detector (8) to compare the wavelengths of the radiation back-reflected by said Bragg gratings (5₁, 5₂, 5₃, ... 5ₙ) with said given wavelengths and to point out any variations thereof.

2. System according to claim 1, **characterised in that** said optical fibre (4) is included within said composite material (3) upon manufacturing of the bottle (1).

3. System according to claim 1, **characterised in that** said given reflection wavelengths in the undeformed condition of said Bragg gratings (5₁, 5₂, 5₃, ... 5ₙ) are different from one another and said optical source transmitter (6) is designed to supply said light radiation to the optical fibre (4) in a continuous fashion.

4. System according to claim 1, **characterised in that** said reflection wavelengths in the undeformed condition of said Bragg gratings (5₁, 5₂, 5₃, ... 5ₙ) are same to one another and said optical source transmitter (6) is designed to supply said light radiation to the optical fibre (4) in a pulsed fashion.

## Patentansprüche

1. System zur Überwachung des Spannungszustands von Hochdruckflaschen, insbesondere Methangasflaschen für Kraftfahrzeuge, mit einem Körper (2), der mindestens teilweise aus einem Verbundmaterial (3) gefertigt ist, mit:
mindestens einem durchgängigen faseroptischen Sensor (4), der um die Flasche (1) gewickelt ist und innerhalb des Verbundmaterials (3) aufgenommen ist, wobei die Faseroptik Bragg-Gitter Reflexionselemente (5₁, 5₂, 5₃,... 5ₙ) hat, die voneinander beabstandet sind, und vorgegebene Reflexionswellenlängen in einem unverformten Zustand haben,
einem optischen Sender (6), um eine Lichtstrahlung zu der Faseroptik (4) zuzuführen,
einem elektrooptischen Sensor (8) für die durch die Bragg-Gitter (5₁, 5₂, 5₃, ... 5ₙ) zurückreflektierte Lichtstrahlung und
einer Analyseeinrichtung (9), die wirkend mit dem elektrooptischen Sensor (8) verbunden ist, um die Wellenlängen der durch die Bragg-Gitter (5₁, 5₂, 5₃,...5ₙ) zurückreflektierten Strahlung mit den vorgegebenen Wellenlängen zu vergleichen und deren jegliche Änderungen aufzuzeigen.

2. System nach Anspruch 1,
**dadurch gekennzeichnet, dass**
die Faseroptik (4) bei Herstellung der Flasche (1) in das Verbundmaterial (3) eingeschlossen wird.

3. System nach Anspruch 1,
**dadurch gekennzeichnet, dass**
die gegebenen Reflexionswellenlängen in dem unverformten Zustand der Bragg-Gitter (5₁, 5₂, 5₃,...5ₙ) voneinander verschieden sind und der optische Sender (6) ausgelegt ist, die Lichtstrahlung zu der Faseroptik (4) in einer kontinuierlichen Weise zuzuführen.

4. System nach Anspruch 1,
**dadurch gekennzeichnet, dass**
die Reflexionswellenlängen in dem unverformten Zustand der Bragg-Gitter (5₁, 5₂, 5_{3,}... 5ₙ) zueinander gleich sind und der optischen Sender (6) ausgelegt ist, die Lichtstrahlung zu der Faseroptik (4) in einer gepulsten Weise zuzuführen.

## Revendications

1. Système de vérification destiné au contrôle de l'état de déformation de bouteilles à haute pression, notamment des bouteilles de gaz méthane destinées à des véhicules à moteur, comprenant un corps (2) au moins partiellement formé d'un matériau composite (3), comportant
au moins un capteur (4) à fibre optique continue enroulée autour de la bouteille (1) et incorporée dans le matériau composite (3), la fibre optique comprenant des éléments réfléchissants à réseau de Bragg (5₁, 5₂, 5₃, ... 5ₙ) espacés mutuellement et ayant des longueurs d'ondes déterminées de réflexion à l'état non déformé,
un émetteur (6) de source optique destiné à transmettre un rayonnement lumineux à la fibre optique (4),
un détecteur électro-optique (8) du rayonnement lumineux renvoyé par les réseaux de Bragg (5₁, 5₂, 5₃, ... 5ₙ), et
un dispositif analyseur (9) connecté pendant le fonctionnement au détecteur électro-optique (8) pour la comparaison des longueurs d'ondes du rayonnement réfléchi par les réseaux de Bragg (5₁, 5₂, 5₃, ... 5ₙ) aux longueurs d'ondes déterminées et l'indication de leurs variations éventuelles.

2. Système selon la revendication 1, **caractérisé en ce que** la fibre optique (4) est incluse dans le matériau composite (3) lors de la fabrication de la bouteille (1).

3. Système selon la revendication 1, **caractérisé en ce que** les longueurs d'ondes déterminées de réflexion à l'état non déformé des réseaux de Bragg (5₁, 5₂, 5₃, ... 5ₙ) sont différentes les unes des autres, et l'émetteur (6) de la source optique est destiné à transmettre le rayonnement lumineux à la fibre optique (4) de façon continue.

4. Système selon la revendication 1, **caractérisé en ce que** les longueurs d'ondes de réflexion à l'état non déformé des réseaux de Bragg (5₁, 5₂, 5₃, ... 5ₙ) sont les mêmes, et l'émetteur de la source optique (6) est destiné à transmettre le rayonnement lumineux à la fibre optique (4) sous forme pulsée.
